# EUROPEAN PATENT APPLICATION

(11) **EP 4 564 113 A1**
(43) Date of publication of application: **04.06.2025**
(21) Application number: 23213695.2
(22) Date of filing: 01.12.2023
(51) Int. Cl.: G05B 24/02, H02J 7/34, G01F 23/80

(54) **FIELD DEVICE SYSTEM WITH VOLTAGE FEEDBACK AND METHOD OF CONTROLLING THE FIELD DEVICE SYSTEM**

(71) Applicant: Rosemount Tank Radar AB, 435 23 Mölnlycke (SE)
(72) Inventor: SJÖQVIST, Staffan, 582 31 LINKÖPING (SE); SUNDARAM, Viswanaath, 584 31 LINKÖPING (SE); NILSSON, Leif, 583 36 LINKÖPING (SE); ARKESTEN, Hans, 591 76 BORENSBERG (SE)
(74) Representative: Kransell & Wennborg KB

(57) **Abstract**

A field device system (100) configured to determine a process variable, the field device system comprising: processing circuitry (102) configured to be connected to a sensing unit (104) for determining a process variable; a power interface (106) arranged to receive power from a power supply (108), and power management circuitry (110) arranged to provide power at an operating voltage to the sensing unit and the processing circuitry, the power management circuitry comprising: a first voltage converter (200), configured to receive a drive voltage from the power interface and to supply an intermediate voltage higher than the operating voltage; a capacitive energy storage (206) arranged to be charged by the intermediate voltage; a second voltage converter (208), configured to receive an input voltage from the capacitive energy storage and to provide the operating voltage; a voltage feedback circuit (214) configured to determine an output voltage of the capacitive energy storage; and a control circuit (216) configured to control the first voltage converter to charge the capacitive energy storage based on the output voltage of the capacitive energy storage.

## Description

### Field of the Invention

The present invention relates to a field device system such as a radar level gauge. In particular, the present invention is aimed at an energy storage for a field device system comprising a voltage feedback circuit for controlling charging of the energy storage.

### Background of the Invention

Field devices are often used in industry to measure various process variables, such as pressure, temperature, flow or product level. In particular, a radar level gauge system is an example of a field device which may be used for measuring the level of a product such as a process fluid, a granular compound or another material.

One type of field device is a radar level gauge which is suitably used for making non-contact measurements of the level of products such as process fluids, granular compounds and other materials. An example of such a radar level gauge can include a microwave unit for transmitting microwaves towards the surface and receiving microwaves reflected by the surface, processing circuitry arranged to communicate with the microwave unit and to determine the level based on a relation between transmitted and received microwaves, an interface for connecting the processing circuitry externally of said radar level gauge, and a power management circuitry providing the microwave unit and the processing circuitry with operating power.

In order to ensure a satisfactory signal level of the received echo, the emitted microwaves must have a sufficient power level. The processing of received signals also requires significant power, and in some cases the clock frequency of the processor is increased during the processing in order to enable high speed calculations. In combination, this results in an increased demand of power during certain parts of the measuring cycle.

For this reason, power management in some form may be required, to distribute the available power between different components and over time. Such power management may include storage of energy in some kind of energy storage device, so that this energy can be used to boost the available power during periods of increased power requirements. The energy storage can take place in specifically designated stand-by periods, following each measurement cycle, or take place throughout the measurement cycle, during periods of low activity.

However, the provision of power is relatively difficult to achieve in practice since energy is normally a scarce resource in the above-discussed type of field devices. In particular, limited available power may be a problem in systems using a two wire feeding system or in battery powered systems.

Accordingly, there is always a need to improve power management for field device systems, and in particular for field device systems with limited power availability.

### Summary

In view of above-mentioned problems, it is an object of the present invention to provide an improved field device system and method for providing an operating voltage in a field device system.

According to a first aspect of the invention, there is provided a field device system configured to determine a process variable, the field device system comprising processing circuitry configured to be connected to a sensing unit for determining a process variable; a power interface arranged to receive power from a power supply, and power management circuitry arranged to provide power at an operating voltage to the sensing unit and the processing circuitry, the power management circuitry comprising: a first voltage converter, having a low voltage end configured to receive a drive voltage from the power interface and a high-voltage end configured to supply an intermediate voltage higher than the operating voltage; a capacitive energy storage arranged to be charged by the intermediate voltage; a second voltage converter, having an input side configured to receive an input voltage from the energy storage and an output side configured to provide the operating voltage; a voltage feedback circuit configured to determine an output voltage of the energy storage; and a control circuit connected to the voltage feedback circuit and configured to control the first voltage converter to charge the capacitive energy storage based on the output voltage of the energy storage.

A field device should be understood to include any device that determines a process variable and communicates a measurement signal indicative of that process variable to a remote location. Examples of field devices include devices for determining process variables such as filling level, temperature, pressure, fluid flow etc.

In the described field device system, energy is stored in the capacitive energy storage at a voltage higher than the operating voltage of the sensing unit.

By storing energy at a higher voltage, it is also possible to use a smaller capacitor while still ensuring that the energy of the capacitor is sufficient for providing the energy required to perform a measurement by the field device.

The capacitive energy storage, e.g. a capacitor, is charged by an external energy source via the first voltage converter so that a measurement operation can be performed using the power in the capacitive energy storage. Once a measurement operation is performed, there may be a remining charge in the capacitor and if there is a long period of time until the next measurement, charge will leak form the capacitor in the form of leakage currents, reducing the stored energy. Thereby, it is desirable to minimize the reaming charge in the capacitor after performing a measurement operation-

The present invention thereby addresses the issue of remaining charge in the capacitive energy storage by means of a voltage feedback circuit capable of monitoring the voltage of the energy storage both before and after a measurement so that the energy storage can be charged in a manner that minimizes the losses in the system. The output voltage of the energy storage is thereby used as an input in a feedback loop for controlling charging of the energy storage after a measurement or in other situations where the energy storage requires charging. It is of particular importance to minimize losses in a battery powered field device system since energy consumption is directly related to battery life.

According to an example embodiment, the control circuit is configured to control the first voltage converter to charge the capacitive energy storage to a predetermined energy level. It can be assumed that the capacitance of the capacitive energy storage is known with sufficient accuracy, making it possible to estimate the amount of energy of the energy storage based on its output voltage. It can thereby be ensured that the total energy of the energy storage is sufficient for performing a measurement.

According to an example embodiment, the control circuit is configured to control the first voltage converter to charge the capacitive energy storage to a voltage level corresponding to the energy required for operation of the field device. It may thereby be sufficient to monitor the output voltage of the energy storage during charging and to control the first voltage converter to stop providing a voltage to the energy storage when a certain voltage level is reached.

According to an example embodiment, the control circuit is configured to: determine a first voltage level of the energy storage before a measurement operation for determining a process variable; determine a second voltage level of the energy storage after the measurement operation for determining a process variable; and control the first voltage converter to charge the capacitive energy storage to a voltage level equal to the difference between the first voltage level and the second voltage level. The control circuit thereby determines the voltage drop over the capacitive energy storage resulting from a measurement by the field device and subsequently charge the energy storage to a voltage level corresponding to the voltage drop.

According to an example embodiment, the control circuit is configured to: determine a first energy level of the energy storage before a measurement operation for determining a process variable; determine a second energy level of the energy storage after the measurement operation for determining a process variable; and control the first voltage converter to charge the capacitive energy storage to an energy level equal to the difference between the first energy level and the second energy level. Since the relation between voltage and energy content of a capacitor is non-linear, it may be desirable to determine the energy of a capacitor before and after performing a measurement. The energy can be determined by knowing the capacitance and measuring the voltage, and the energy content can then be determined analytically or using a look-up table or empirical data. In particular, the capacitance of a capacitor and subsequently the energy storage capability may depend on parameters such as temperature, age of the capacitor and the like, which may then be taken into account when charging the energy storage to a suitable energy level.

According to an example embodiment, the control circuit is further configured to control the rate of charge of the energy storage by controlling a duty cycle of the first voltage converter. The power supply may for example have a maximum allowable current limiting the rate of charge. An energy storage such as a capacitor may also have limitations in terms of how fast the energy storage can be charged. There may for example be a maximum allowable charging current to ensure safe charging of a capacitor. By controlling the duty cycle of the first voltage converter the rate of charge can be controlled without having to control the external power supply.

According to an example embodiment, the second voltage converter is an up/down converter, which may also be referred to as a buck/boost converter or a SEPIC (single-ended primary-inductor converter) converter. In most cases, the second converter acts as a step-down converter to provide an operating voltage to the processing circuitry which is lower than the output voltage of the energy storage. However, in some situations the output voltage of the energy storage may be lower than the desired operating voltage and the second converter can then operate as an up-converter to provide the required operating voltage which may increase the utility of the power management circuitry since a specified operating voltage can be provided for a larger range of output voltages from the energy storage.

According to a second aspect of the invention, it is provided a method for providing an operating voltage in a field device system configured to determine a process variable, the field device system comprising processing circuitry configured to be connected to a sensing unit for determining a process variable, a power interface arranged to receive power from a power supply, and power management circuitry arranged to provide power at an operating voltage to the sensing unit and the processing circuitry, the method comprising, by a control circuit of the power management circuitry: controlling a first voltage converter receiving a drive voltage from the power interface to supply an intermediate voltage higher than the operating voltage to a capacitive energy storage; controlling a second voltage converter receiving an input voltage from the energy storage to provide the operating voltage to the processing circuitry; controlling a voltage feedback circuit to determine an output voltage of the energy storage after performing a measurement operation determining a process variable; and controlling a control circuit to control the first voltage converter to charge the capacitive energy storage based on an output voltage of the energy storage after performing the measurement operation.

According to an example embodiment the method further comprises controlling, by the control circuit, the first voltage converter to charge the capacitive energy storage to a predetermined energy level.

According to an example embodiment the method further comprises controlling the first voltage converter to charge the capacitive energy storage to a voltage level corresponding to the energy required for operation of the field device. The required voltage level for a given capacitive energy storage can be based on the capacitance of the energy storage and the required energy for performing a measurement operation.

According to an example embodiment, the method further comprises, by the control circuit: determining a first voltage level of the energy storage before a measurement operation for determining a process variable; determining a second voltage level of the energy storage after the measurement operation for determining a process variable; and controlling the first voltage converter to charge the capacitive energy storage to a voltage level equal to the difference between the first voltage level and the second voltage level.

According to an example embodiment, the method further comprises, by the control circuit: determining a first energy level of the energy storage before a measurement operation for determining a process variable; determining a second energy level of the energy storage after the measurement operation for determining a process variable; controlling the first voltage converter to charge the capacitive energy storage to an energy level equal to the difference between the first energy level and the second energy level.

According to an example embodiment, the method further comprises: determining an output voltage of the energy storage before performing the measurement operation; comparing the output voltage of the energy storage after performing the measurement operation with a predetermined threshold voltage; and if the output voltage of the energy storage after performing the measurement operation is below the predetermined threshold voltage, controlling the first voltage converter to charge the capacitive energy storage to a voltage level higher than the output voltage before performing the measurement operation. A suitable charging level for the energy storage can thereby be arrived at by an iterative approach where charging involves a stepwise increase of the output voltage of the energy storage.

Further effects and features of the second aspect of the invention are largely analogous to those described above in connection with the first aspect of the invention.

There is also provided a computer program product comprising program code for performing, when executed by a processor device, the method of any of the aforementioned embodiments, a control system comprising one or more control units configured to perform the method and a non-transitory computer-readable storage medium comprising instructions, which when executed by the processor device, cause the processor device to perform the method of any of the aforementioned embodiments.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates an exemplary field device system in the form of a radar level gauge system;
Fig. 2 is a schematic block diagram of a field device system illustrating power management circuitry according to an example embodiment;
Fig. 3 is a graph schematically illustrating charging and discharging of a capacitive energy storage in a field device system;
Fig. 4 is a graph schematically illustrating charging and discharging of a capacitive energy storage in a field device system according to an example embodiment;
Fig. 5 is a flow chart outlining steps of a method according to an example embodiment;
Fig. 6 is a flow chart outlining steps of a method according to an example embodiment;
Fig. 7 is a flow chart outlining steps of a method according to an example embodiment; and
Fig. 8 is a flow chart outlining steps of a method according to an example embodiment.

### Detailed Description of Example Embodiments

In the present detailed description, various embodiments of a field device system configured to determine a process variable are mainly described with reference to a field device in the form of a radar level gauge system installed in a tank. However, the described system and method is suitable for any type of field device using a capacitive energy storage for providing power to a field device.

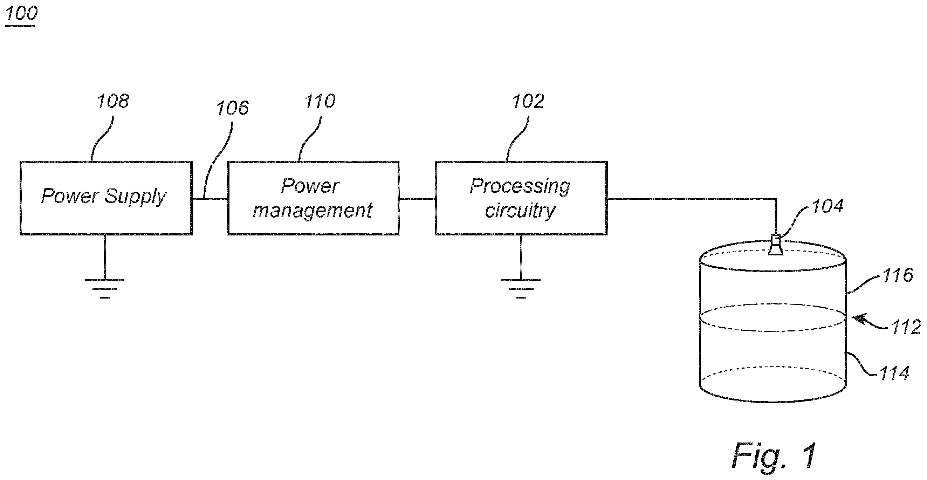

Fig. 1 schematically illustrates an example embodiment of the present invention comprising a field device system 100 in the form of a radar level sensing unit 104 arranged on a tank 116. The radar level gauge system 100 is typically configured to determine a process variable in the form of a fill level 112 of a product 114 in the tank 116. The operation general principles of a radar level gauge 104 is well known and will not be discussed in further detail in the present disclosure.

The field device system 100 comprises processing circuitry 102 configured to be connected to the sensing unit 104, a power interface 106 arranged to receive power from a power supply 108, and power management circuitry 110 arranged to provide power at an operating voltage to the sensing unit 104 and to the processing circuitry 102. The processing circuitry 102 typically controls the overall operation of the field device 104. In Fig. 1 the processing circuitry 102 power supply 108 and power management circuitry 110 is illustrated separately from the field device 104 for illustrative purposes, and in many cases the described components are arranged in the housing of the field device 104.

The power supply 108 may be either a battery or a wired connection such as a 4-20 mA industrial loop which is capable of both providing drive power and communicating a measurement signal through a two-wire interface. The power management circuitry 110 is for example configured to receive an input voltage at the power interface 106 in the range of 3-7 V and an operating voltage may for example be in the range of 3-5 V.

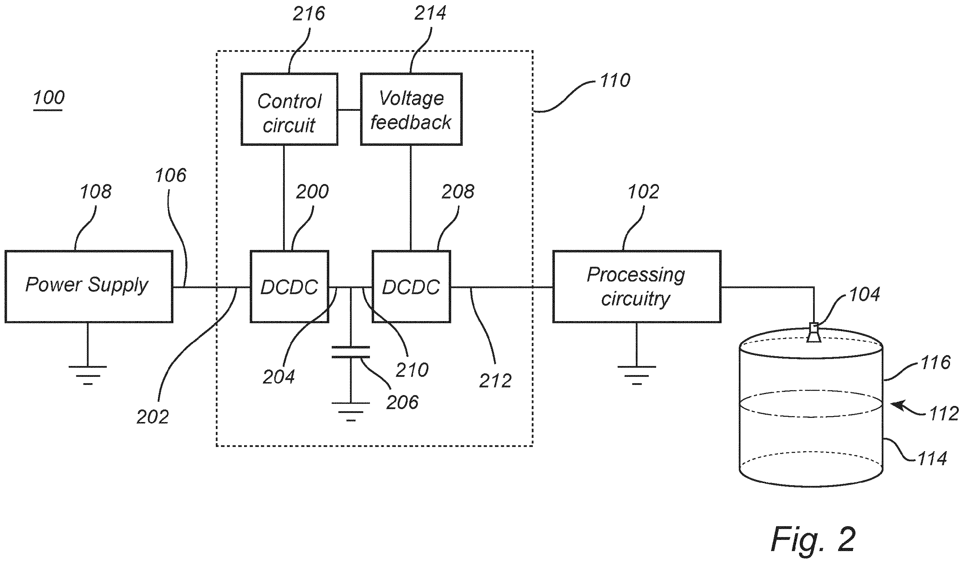

Fig. 2 is a block diagram schematically illustrating the power management circuitry 110 comprising a first voltage converter 200, having a low voltage end 202 configured to receive a drive voltage from the power interface 106 and a high-voltage end 204 configured to supply an intermediate voltage higher than the operating voltage of the sensing unit 104. The first voltage converter thereby operates as an up-converter even though it in principle is possible to use an up/down converter. In an example implementation, the first voltage converter 200 is a step-up converter (boost converter) and the second voltage converter 208 is a step-down converter (buck converter).

The power management circuitry 110 further comprises a capacitive energy storage 206, here represented by a single capacitor 206, arranged to be charged by the intermediate voltage. However, the energy storage energy storage 206 may also consist of a plurality of capacitors arranged in series, in parallel, or both, as may be required to fulfil the requirements of a given implementation.

It is desirable to use a capacitor having a maximum rated voltage V which is low in order to reduce the size of the capacitor. Moreover, it is desirable to use a voltage in the energy storage that is as close as possible to the rated maximum voltage of the capacitor in order to minimize the physical size of the capacitor. The energy storage capability of a capacitor, E_{cap}, is equal to CV²/2 where C is the capacitance of the capacitor. It can be assumed that a certain amount of energy is required for performing the measurement operation, so by selecting a capacitor having a higher rated voltage, the size (capacitance) of the capacitor can be reduced with mainlined energy storage capability. The maximum voltage may for example be 20V. The maximum allowable voltage may for example be limited based on Ex requirements where the maximum voltage depends on the Ex protection method. If the power management circuitry 110 is appropriately encapsulated, there may not be a limitation on the capacitance or voltage, but components connected to the power management circuitry 110 are preferably designed to handle potential discharge of stored energy on the power management circuitry 110.

Next, the power management circuitry 110 comprises a second voltage converter 208 having an input side 210 configured to receive an input voltage from the capacitive energy storage 206 and an output side 212 configured to provide the operating voltage to the sensing circuit 104 and to the processing circuitry 102, a voltage feedback circuit 214 configured to determine an output voltage of the capacitive energy storage 206 and a control circuit 216 connected to the voltage feedback circuit 214 and configured to control the first voltage converter 200 to charge the capacitive energy storage 206 based on the output voltage of the capacitive energy storage 206. The voltage feedback circuit 214 may in its simplest form be a voltage measurement unit arranged to measure the output voltage of the capacitive energy storage 206 and provide a signal indicative of the output voltage to the control circuit 216 which in turn controls charging of the capacitor 206. The control circuit 216 is thereby capable of adapting charging parameters for the capacitor 206 depending on the output voltage of the capacitor 206 and the control circuit 216 may also be referred to as a charging control circuit 216.

Moreover, the capacitance C of the capacitor 206 is considered to be known so that the control circuit 216 can determine the amount of stored energy in the capacitor based on the output voltage of the capacitor 206 with sufficient accuracy. The capacitance can for example be modeled taking parameters such as temperature and age into account, but it may also be sufficient to know the approximate capacitance value of the capacitive energy storage.

The processing circuitry 102 and control circuit 216 described herein may include a microprocessor, microcontroller, programmable digital signal processor or another programmable processor device. The processing circuitry 102 and control circuit 216 may also, or instead, include an application specific integrated circuit, a programmable gate array or programmable array logic, a programmable logic device, or a digital signal processor. Where the processing circuitry 102 and control circuit 216 includes a programmable device such as the microprocessor, microcontroller or programmable digital signal processor mentioned above, the processor may further include computer executable code that controls operation of the programmable device.

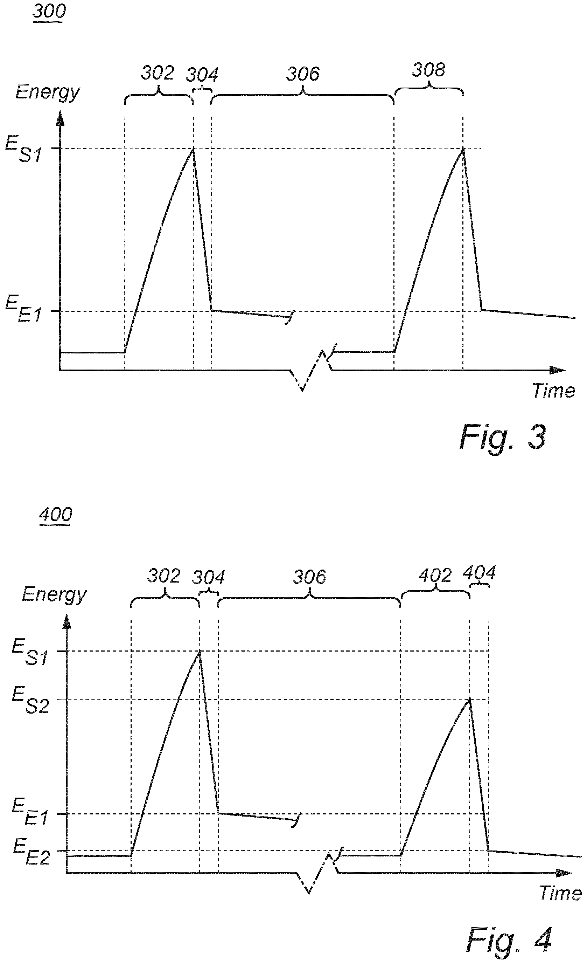

Fig. 3 is a diagram 300 illustrating the energy content of a capacitive energy storage 206 in the form of a capacitor over time during two charging cycles in a system without a voltage feedback circuit. In a first stage 302, the capacitor is charged to a first energy level E_{S1} which is known to be sufficient for performing a measurement operation as illustrated in the next stage 304. After a measurement has been performed, the remaining energy in the capacitor is denoted E_{E1}, and the energy consumed by the measurement ΔE₁ is equal to E_{S1} - E_{E1}. During a waiting period 306 between measurements the energy of the capacitor is dissipating due to leakage currents and when it is time to perform a new measurement the capacitor is again charged 308 to the starting energy E_{S1} and the measurement cycle is repeated.

Fig. 4 is a diagram 400 illustrating the energy content of a capacitive energy storage 206 in the form of a capacitor over time during two charging cycles in a system with a voltage feedback circuit 214 according to various embodiments of the invention. In Fig. 4, the first three stages of charging 302, discharging 304 and waiting 306 are the same as in Fig. 3. However, in the subsequent charging step 402 the capacitor is charged to an energy level E_{S2} which is lower than E_{S1}, and after a measurement 404 is performed, the remaining energy E_{E2} is lower than E_{E1} but still above zero. The lower start and end energy E_{S2} and E_{E2} thereby means that less energy is consumed during charging of the capacitor 206 due to the quadratic dependence between energy and voltage, and less energy is lost through leakage currents. As a result of the voltage feedback circuit, the overall energy consumption of the field device system can thereby be reduced.

There is typically a minimum voltage level below which it is no longer possible to up-convert the output voltage of the capacitor 206 to the required operating voltage. The level of such a minimum voltage depends on for example the properties of the second voltage converter 208. Accordingly, an additional condition when charging the capacitor 206 may be that the end voltage after performing a measurement should not be below a predetermined threshold voltage. A preferred embodiment may be that the capacitor is charged to a level so that the output voltage after a measurement is slightly above the operating voltage.

Charging of the capacitor 206 can be done by simply turning the first voltage converter 200 on and turning it off when a certain start voltage is reached. However, the rate of charging of the capacitor 206 can also be controlled by controlling a duty cycle of the first voltage converter 200. There is typically also a maximum allowable current from the power supply which should not be exceeded, and such a maximum current may be fixed as part of the design of the system to prevent that too high currents reach the power management circuitry 110.

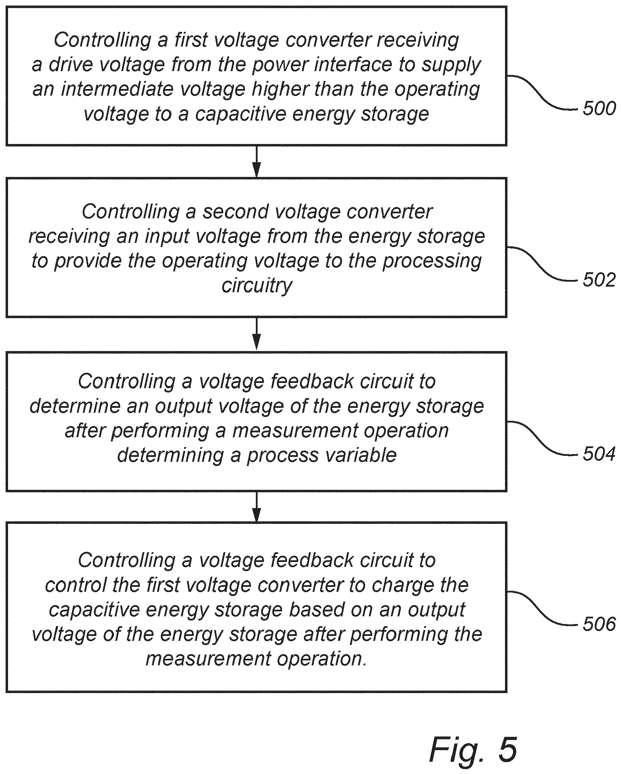

Figs. 5-8 are flow charts describing steps of methods according example embodiments, and the methods will be discussed with reference to the field device system of Fig. 2 where the power management circuitry 110 may perform the described steps.

Fig. 5 is a flow chart outlining steps of a method according to an example embodiment. The method comprises controlling 500 the first voltage converter 200 receiving a drive voltage from the power interface 106 to supply an intermediate voltage higher than the operating voltage to the capacitive energy storage 206, controlling 502 the second voltage converter 208 receiving an input voltage from the capacitive energy storage 206 to provide the operating voltage to the processing circuitry 102, controlling 504 the voltage feedback circuit 214 to determine an output voltage of the capacitive energy storage 206 after performing a measurement operation determining a process variable, and controlling 506 the voltage feedback circuit 214 to control the first voltage converter 200 to charge the capacitive energy storage 206 based on an output voltage of the capacitive energy storage 206 after performing the measurement operation.

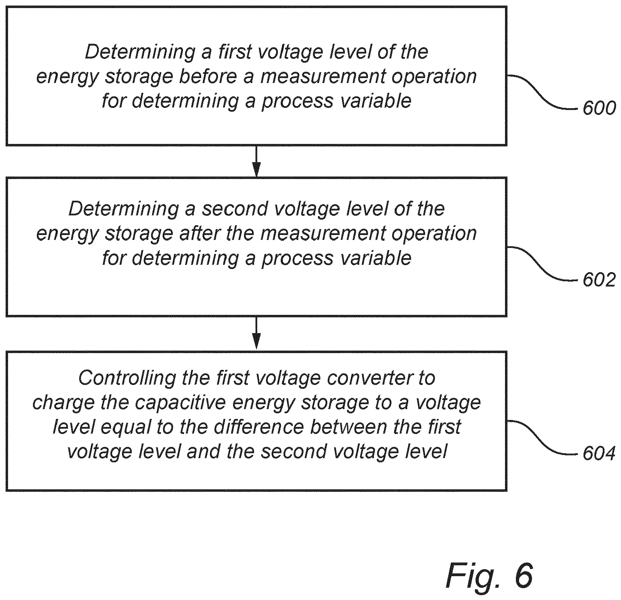

Fig. 6 is a flow chart outlining steps of a method according to an example embodiment, and the method comprises determining 600 a first voltage level of the capacitive energy storage 206 before a measurement operation for determining a process variable, determining 602 a second voltage level of the capacitive energy storage 206 after the measurement operation for determining a process variable; and controlling 604 the first voltage converter 200 to charge the capacitive energy storage 206 to a voltage level equal to the difference between the first voltage level and the second voltage level.

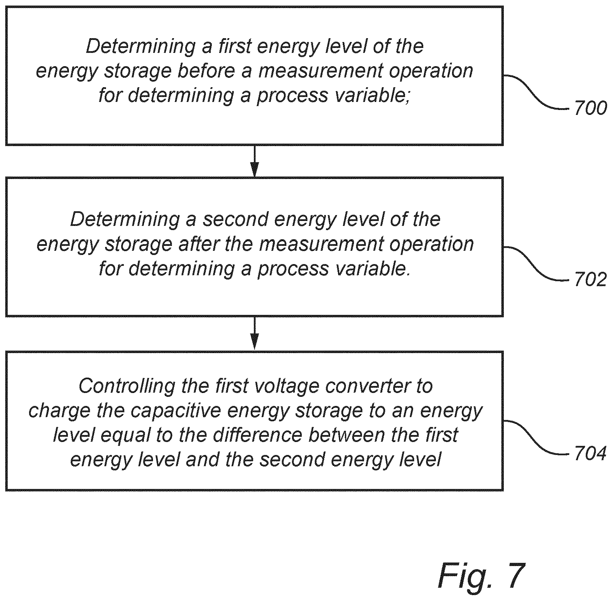

Fig. 7 is a flow chart outlining steps of a method according to an example embodiment, and the method comprises determining 700 a first energy level of the capacitive energy storage 206 before a measurement operation for determining a process variable, determining 702 a second energy level of the capacitive energy storage 206 after the measurement operation for determining a process variable, and controlling 704 the first voltage converter 200 to charge the capacitive energy storage 206 to an energy level equal to the difference between the first energy level and the second energy level.

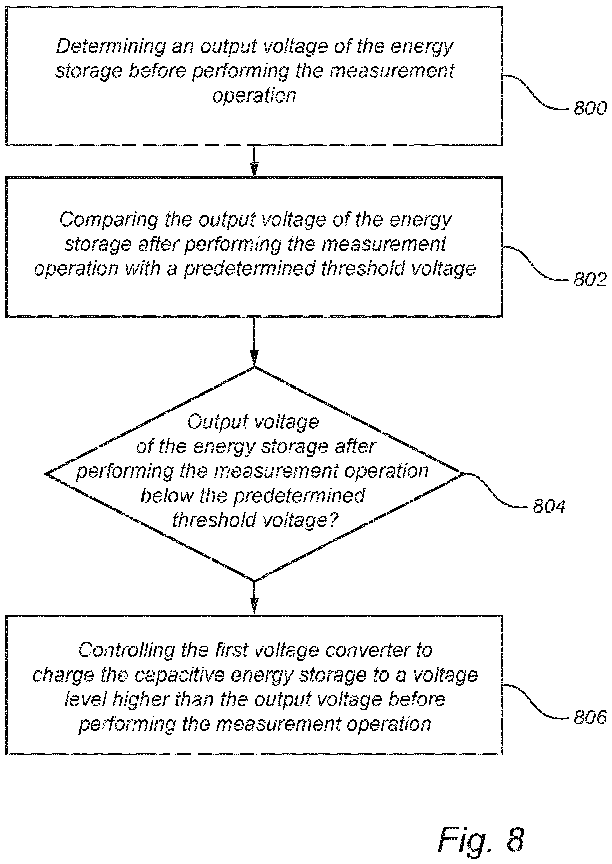

Fig. 8 is a flow chart outlining steps of a method according to an example embodiment, and the method comprises determining 800 an output voltage of the capacitive energy storage 206 before performing the measurement operation, comparing 802 the output voltage of the capacitive energy storage 206 after performing the measurement operation with a predetermined threshold voltage, and if 804 the output voltage of the capacitive energy storage 206 after performing the measurement operation is below the predetermined threshold voltage, controlling 806 the first voltage converter 200 to charge the capacitive energy storage 206 to a voltage level higher than the output voltage before performing the measurement operation. The method of Fig. 8 thereby describes an iterative approach where a suitable starting voltage can be found by charging the capacitor 206 to subsequently higher voltage until a remaining voltage after a measurement is at or above a threshold value. The voltage threshold value may be set by design or it may be dynamically set by the control circuit. For example, the threshold value may be dynamically set so that it is verified that a measurement operation does not fail due to too low energy or voltage form the capacitor 206. Since external conditions for the overall may be changing, a dynamically set threshold value can adapt the charging operation based on changing conditions to optimize energy usage.

Even though the invention has been described with reference to specific exemplifying embodiments thereof, many different alterations, modifications and the like will become apparent for those skilled in the art. Also, it should be noted that parts of the system and method may be omitted, interchanged or arranged in various ways, the system and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

**1.** A field device system (100) configured to determine a process variable, the field device system comprising:
processing circuitry (102) configured to be connected to a sensing unit (104) for determining a process variable;
a power interface (106) arranged to receive power from a power supply (108), and
power management circuitry (110) arranged to provide power at an operating voltage to the sensing unit and the processing circuitry, the power management circuitry comprising:
a first voltage converter (200), having a low voltage end (202) configured to receive a drive voltage from the power interface and a high-voltage end (204) configured to supply an intermediate voltage higher than the operating voltage;
a capacitive energy storage (206) arranged to be charged by the intermediate voltage;
a second voltage converter (208), having an input side (210) configured to receive an input voltage from the capacitive energy storage and an output side (212) configured to provide the operating voltage;
a voltage feedback circuit (214) configured to determine an output voltage of the capacitive energy storage; and
a control circuit (216) connected to the voltage feedback circuit and configured to control the first voltage converter to charge the capacitive energy storage based on the output voltage of the capacitive energy storage.

**2.** The field device system according to claim 1, wherein the control circuit is configured to control the first voltage converter to charge the capacitive energy storage to a predetermined energy level.

**3.** The field device system according to claim 1, wherein the control circuit is configured to control the first voltage converter to charge the capacitive energy storage to a voltage level corresponding to the energy required for operation of the field device.

**4.** The field device system according to claim 1, wherein the control circuit is configured to:
determine a first voltage level of the capacitive energy storage before a measurement operation for determining a process variable;
determine a second voltage level of the capacitive energy storage after the measurement operation for determining a process variable; and
control the first voltage converter to charge the capacitive energy storage to a voltage level equal to the difference between the first voltage level and the second voltage level.

**5.** The field device system according to claim 1, wherein the control circuit is configured to:
determine a first energy level of the capacitive energy storage before a measurement operation for determining a process variable;
determine a second energy level of the capacitive energy storage after the measurement operation for determining a process variable; and
control the first voltage converter to charge the capacitive energy storage to an energy level equal to the difference between the first energy level and the second energy level.

**6.** The field device system according to any one of the preceding claims, wherein the control circuit is further configured to control the rate of charge of the capacitive energy storage by controlling a duty cycle of the first voltage converter.

**7.** The field device system according to any one of the preceding claims, wherein the second voltage converter is an up/down converter.

**8.** Method for providing an operating voltage in a field device system (100) configured to determine a process variable, the field device system comprising processing circuitry (102) configured to be connected to a sensing unit (104) for determining a process variable, a power interface (106) arranged to receive power from a power supply (108), and power management circuitry (110) arranged to provide power at an operating voltage to the sensing unit and the processing circuitry, the method comprising, by a control circuit (216) of the power management circuitry:
controlling (500) a first voltage converter (200) receiving a drive voltage from the power interface to supply an intermediate voltage higher than the operating voltage to a capacitive energy storage (206);
controlling (502) a second voltage converter (208) receiving an input voltage from the capacitive energy storage to provide the operating voltage to the processing circuitry;
controlling (504) a voltage feedback circuit (214) to determine an output voltage of the capacitive energy storage after performing a measurement operation determining a process variable; and
controlling (506) a control circuit (206) to control the first voltage converter to charge the capacitive energy storage based on an output voltage of the capacitive energy storage after performing the measurement operation.

**10.** The method according to claim 8, further comprising controlling, by the control circuit, the first voltage converter to charge the capacitive energy storage to a predetermined energy level.

**11.** The method according to claim 8, further comprising controlling the first voltage converter to charge the capacitive energy storage to a voltage level corresponding to the energy required for operation of the field device.

**12.** The method according to claim 8, further comprising, by the control circuit:
determining (600) a first voltage level of the capacitive energy storage before a measurement operation for determining a process variable;
determining (602) a second voltage level of the capacitive energy storage after the measurement operation for determining a process variable; and
controlling (604) the first voltage converter to charge the capacitive energy storage to a voltage level equal to the difference between the first voltage level and the second voltage level.

**12.** The method according to claim 8, further comprising, by the control circuit:
determining (700) a first energy level of the capacitive energy storage before a measurement operation for determining a process variable;
determining (702) a second energy level of the capacitive energy storage after the measurement operation for determining a process variable; and
controlling (704) the first voltage converter to charge the capacitive energy storage to an energy level equal to the difference between the first energy level and the second energy level.

**13.** The method according to claim 8, further comprising:
determining (800) an output voltage of the capacitive energy storage before performing the measurement operation;
comparing (802) the output voltage of the capacitive energy storage after performing the measurement operation with a predetermined threshold voltage; and
if (804) the output voltage of the capacitive energy storage after performing the measurement operation is below the predetermined threshold voltage, controlling (806) the first voltage converter to charge the capacitive energy storage to a voltage level higher than the output voltage before performing the measurement operation.

**14.** A computer program product comprising program code for performing, when executed by a processor device, the method of any of claims 8 to 13.

**15.** A non-transitory computer-readable storage medium comprising instructions, which when executed by a processor device, cause the processor device to perform the method of any of claims 8 to 13.
